# EUROPEAN PATENT APPLICATION

(11) **EP 4 804 539 A1**
(43) Date of publication of application: **09.09.2026**
(21) Application number: 24885002.6
(22) Date of filing: 01.11.2024
(51) Int. Cl.: H04N 21/431

(54) **INFORMATION DISPLAY METHOD AND APPARATUS, DEVICE, AND STORAGE MEDIUM**

(30) Priority: 01.11.2023 CN 202311446875
(71) Applicant: Beijing Zitiao Network Technology Co., Ltd., Beijing 100190 (CN)
(72) Inventor: FANG, Angxiang, Beijing 100028 (CN); WU, Xuheng, Beijing 100028 (CN)
(74) Representative: Marks & Clerk LLP
(86) International application number: PCT/CN2024/129481
(87) International publication number: WO 2025/093005

(57) **Abstract**

Embodiments of the present disclosure relate to an information display method, an apparatus, a device, and a storage medium. The method proposed herein includes: displaying a target interface associated with a historical live streaming event of a live streaming room, where the historical live streaming event is a live streaming event that has ended in the live streaming room, and the live streaming room has received a plurality of comments during the historical live streaming event; and displaying, in the target interface, at least one comment filtered from the plurality of comments based on a preset condition. Based on the above approach, the embodiments of the present disclosure can provide comment review about the historical live streaming event, and may present filtered comments to improve the efficiency of obtaining comments.

## Description

The present application claims priority to Chinese Patent Application No. 202311446875.X, filed on November 01, 2023, and entitled "INFORMATION DISPLAY METHOD, APPARATUS, DEVICE, AND STORAGE MEDIUM", which is hereby incorporated by reference in its entirety.

### TECHNICAL FIELD

Example embodiments of the present disclosure generally relate to the field of computers, and in particular, to an information display method, an apparatus, a device, and a computer-readable storage medium.

### BACKGROUND

With the development of computer technology, the Internet has become an important source for people to obtain various contents. The live streaming technology that uses the Internet and streaming media technology to disseminate content has developed rapidly. People may interact in various ways through live streaming rooms and obtain rich types of information through the live streaming rooms.

### SUMMARY

In a first aspect of the present disclosure, an information display method is provided. The method includes: displaying a target interface associated with a historical live streaming event of a live streaming room, where the historical live streaming event is a live streaming event that has ended in the live streaming room, and the live streaming room has received a plurality of comments during the historical live streaming event; and displaying, in the target interface, at least one comment filtered from the plurality of comments based on a preset condition.

In a second aspect of the present disclosure, an information display method is provided. The method includes: obtaining configuration information, the configuration information indicating a set of tags associated with a live streaming room; and displaying, in a target interface associated with a historical live streaming event of the live streaming room, at least one comment matching at least one tag in the set of tags from a plurality of comments, where the historical live streaming event is a live streaming event that has ended in the live streaming room, and the live streaming room has received the plurality of comments during the historical live streaming event.

In a third aspect of the present disclosure, an information display apparatus is provided. The apparatus includes: an interface displaying module configured to display a target interface associated with a historical live streaming event of a live streaming room, where the historical live streaming event is a live streaming event that has ended in the live streaming room, and the live streaming room has received a plurality of comments during the historical live streaming event; and a comment displaying module configured to display, in the target interface, at least one comment filtered from the plurality of comments based on a preset condition.

In a fourth aspect of the present disclosure, an information display apparatus is provided. The apparatus includes: a configuration obtaining module configured to obtain configuration information, the configuration information indicating a set of tags associated with a live streaming room; and a comment filtering module configured to display, in a target interface associated with a historical live streaming event of the live streaming room, at least one comment matching at least one tag in the set of tags from a plurality of comments, where the historical live streaming event is a live streaming event that has ended in the live streaming room, and the live streaming room has received the plurality of comments during the historical live streaming event.

In a fifth aspect of the present disclosure, an electronic device is provided. The device includes at least one processing unit; and at least one memory coupled to the at least one processing unit and storing instructions for execution by the at least one processing unit. The instructions, when executed by the at least one processing unit, causes the device to perform the method of the first aspect or the second aspect.

In a sixth aspect of the present disclosure, a computer-readable storage medium is provided. The computer-readable storage medium stores a computer program thereon, and the computer program is executable by a processor to implement the method of the first aspect or the second aspect.

It should be appreciated that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of the embodiments of the present disclosure will become more apparent in combination with the drawings and with reference to the following detailed description. In the drawings, the same or similar reference numbers refer to the same or similar elements, where:
Fig. 1 illustrates a schematic diagram of an example environment in which embodiments according to the present disclosure may be implemented;
Fig. 2A to Fig. 2F illustrate example interfaces according to some embodiments of the present disclosure;
Fig. 3A and Fig. 3B illustrate flowcharts of example information display processes according to some embodiments of the present disclosure;
Fig. 4A and Fig. 4B illustrate schematic structural block diagrams of information display apparatuses according to some embodiments of the present disclosure; and
Fig. 5 illustrates a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. On the contrary, these embodiments are provided for a more thorough and complete understanding of the present disclosure. It should be understood that the drawings and embodiments of the present disclosure are only for illustrative purposes and are not intended to limit the scope of protection of the present disclosure.

It should be noted that the titles of any section/subsection provided herein are not restrictive. Various embodiments are described throughout this article, and any type of embodiment may be included under any section/subsection. Furthermore, the embodiments described in any section/subsection may be combined in any way with any other embodiments described in the same section/subsection and/or different sections/subsections.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition, and/or data use, etc. These aspects all follow corresponding laws, regulations, and related provisions. In the embodiments of the present disclosure, all data collection, acquisition, processing, handling, forwarding, and use are performed on the premise that the user is aware and confirms. Accordingly, when implementing the embodiments of the present disclosure, the user should be informed of the type, scope of use, use scenarios, etc., of the data or information that may be involved and obtain the authorization of the user in an appropriate manner in accordance with relevant laws and regulations. The specific manner of informing and/or authorizing may vary according to actual situations and application scenarios, and the scope of the present disclosure is not limited in this regard.

If the solutions in this specification and the embodiments involve personal information processing, the processing will be performed on the premise that there is a legal basis (for example, the consent of the personal information subject is gained, or it is necessary to perform a contract, etc.), and will only be performed within the scope of provisions or agreements. If a user refuses to process personal information other than the necessary information required for the basic functions, it will not affect the user's use of the basic functions.

As introduced above with reference to the background, live streaming has become an important form of Internet interaction. People, for example, may initiate live streaming and become a live streamer of a live streaming room. Alternatively, people may also join other live streaming rooms to obtain corresponding live streaming content.

During the live streaming, users in the live streaming room may interact in various ways, such as commenting. However, it is usually difficult for a live streamer to obtain information about a large number of comments in a live streaming room in a short time, and thus may miss interaction needs of other users in the live streaming room.

In view of this, the embodiments of the present disclosure provide an information display solution. According to this solution, a target interface associated with a historical live streaming event of a live streaming room may be displayed, where the historical live streaming event is a live streaming event that has ended in the live streaming room, and the live streaming room has received a plurality of comments during the historical live streaming event. Furthermore, at least one comment filtered from the plurality of comments based on a preset condition may be displayed in the target interface.

Based on the above approach, the embodiments of the present disclosure can provide comment review about the historical live streaming event, and may present filtered comments to improve the efficiency of obtaining comments.

Various example implementations of the solution will be described in detail below in combination with the drawings.

### EXAMPLE ENVIRONMENT

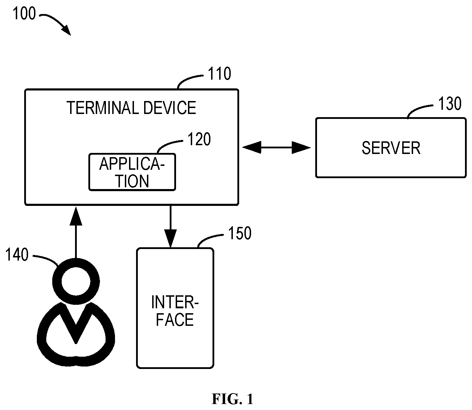

Fig. 1 illustrates a schematic diagram of an example environment 100 in which the embodiments of the present disclosure may be implemented. As shown in Fig. 1, the example environment 100 may include a terminal device 110.

In this example environment 100, the terminal device 110 may run an application 120 for providing and viewing media content. The application 120 may be any suitable type of application for providing and viewing media content, examples of which may include but are not limited to: an online video application, and a live streaming application. A user 140 may interact with the application 120 via the terminal device 110 and/or its attached device. The user 140 may be, for example, a user who provides live streaming content (also referred to as a live streamer), and a user who watches live streaming (also referred to as an audience).

In the environment 100 of Fig. 1, if the application 120 is active, the terminal device 110 may present a live streaming interface 150 through the application 120.

In some embodiments, the terminal device 110 communicates with a server 130 to implement the provision of services for the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the above, including the accessories and peripherals of these devices, or any combination thereof. In some embodiments, the terminal device 110 may also support any type of user-specific interface (such as "wearable" circuitry, etc.).

The server 130 may be an independent physical server, a server cluster or distributed system composed of multiple physical servers, or may provide cloud services, cloud databases, cloud computing, cloud functions, cloud storage, network services, cloud communications, middleware services, domain name services, security services, content delivery networks, and cloud servers for basic cloud computing services such as big data and artificial intelligence platforms. The server 130 may include, for example, a computing system/server, such as a mainframe, an edge computing node, a computing device in a cloud environment, and so on. The server 130 may provide background services for the application 120 supporting virtual scenes in the terminal device 110.

A communication connection may be established between the server 130 and the terminal device 110. The communication connection may be established in a wired or wireless manner. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the terminal device 110 may implement signaling interaction through the communication connection therebetween.

It should be understood that the structure and function of each element in the environment 100 are described for illustrative purposes only, without suggesting any limitation to the scope of the present disclosure.

Some example embodiments of the present disclosure will be described below with continued reference to the drawings.

### EXAMPLE INTERFACE

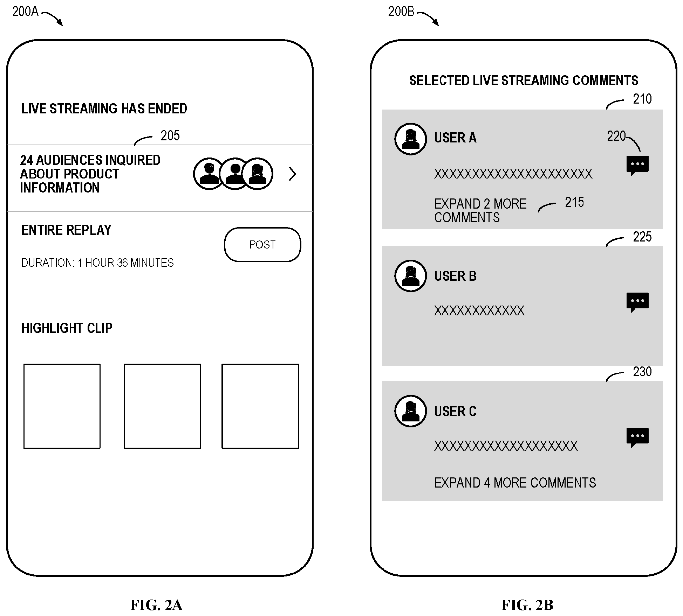

Some example embodiments of the present disclosure will be described below with continued reference to the drawings. Fig. 2A illustrates an example interface 200A according to some embodiments of the present disclosure, and the interface 200A may be provided, for example, by the terminal device 110 associated with a user 140 (for example, a live streamer user or a management user of a live streaming room) in the live streaming room.

The interface 200A may be used to provide a review of a historical live streaming event in the live streaming room, which may also be referred to as a review interface. The historical live streaming event is a live streaming event that has ended in the live streaming room, for example, a live streaming session that has ended.

In some examples, the terminal device 110 may display the review interface of a live streaming session after the live streaming ends. Alternatively, the terminal device 110 may also display the review interface of an ended live streaming based on a viewing request from a specific user (for example, a live streamer user, or a management user) in the live streaming room.

As shown in Fig. 2A, the terminal device 110 may display an entry 205 in the interface 200A. The entry 205 may be used to guide to an interface 200B, which will be introduced below.

In some embodiments, the entry 205 may also indicate information associated with a plurality of comments received by the live streaming room during the historical live streaming event. In some examples, the entry 205 may indicate the number of comments associated with a preset theme in the received plurality of comments or the at least one filtered comment. For example, the entry 205 may indicate that "200 comments inquired about product information". As another example, the entry 205 may also indicate the number of users who send comments associated with the preset theme. As shown in Fig. 2A, the entry 205 may indicate that "24 audiences commented and inquired about product information". Additionally, the entry 205 may further indicate, for example, an identification (for example, an image identification) of one or more users who send comments associated with the preset theme.

In this way, the embodiments of the present disclosure can help the user quickly perceive interaction information about a specific theme in the historical live streaming event.

Furthermore, after receiving a selection for the entry 205, the terminal device 110 may display an interface 200B (also referred to as a target interface) as shown in Fig. 2B. As shown in Fig. 2B, the terminal device 110 may display, in the interface 200B, at least one comment filtered from a plurality of comments in the historical live streaming event based on a preset condition, for example, a comment 210, a comment 225, and a comment 230.

Specifically, in order to facilitate the user to obtain a specific comment in the historical live streaming event more efficiently, the server 130, for example, may filter the plurality of comments based on the preset condition, so as to provide the user with comments that better meet his/her needs.

Based on this approach, the embodiments of the present disclosure can not only provide the user with a review of comments in the historical live streaming event, but also provide comments that better meet the user's expectations by filtering comments, thereby improving the user's information acquisition efficiency.

In some embodiments, the preset condition includes that a content evaluation of the comment is above a threshold. For example, the content evaluation may be determined by the terminal device 110 or the server 130 by processing the comment using a first model.

Taking the server 130 as an example, the server 130 may, for example, use a content evaluation model to determine content evaluations of the plurality of comments received in the historical live streaming event, and may filter comments with content evaluations above the threshold from the plurality of comments. Accordingly, the server 130 may use the interface 200B to provide a review of such comments.

It should be understood that such a first model may be implemented using any appropriate known model for determining the content evaluation of a comment, and the present disclosure is not intended to limit this.

Accordingly, the embodiments of the present disclosure may improve the efficiency of the user viewing comments in the historical live streaming event by providing the user with comment filtering based on the content evaluation of comments.

In some embodiments, the preset condition may include that the relevance of the comment to a preset tag is above a third threshold. For example, the relevance is determined by the terminal device 110 or the server 130 by processing the comment using a second model.

In some embodiments, such a preset tag may be related to the live streaming room or the historical live streaming event, for example. For example, if the category of the live streaming room is product promotion, or the historical live streaming event is about the theme of product promotion, such a preset tag may be, for example, "product consultation". It should be understood that when the category of the live streaming room or the theme involved in the historical live streaming event is different, such a preset tag may also be different, for example.

Furthermore, the server 130 may, for example, use a relevance determination model to determine the relevance between the plurality of comments in the historical live streaming event and the preset tag, and may filter comments with a relevance higher than the threshold from the plurality of comments. Accordingly, the server 130 may use the interface 200B to provide a review of such comments.

It should be understood that such a second model may be implemented using a known model for determining the relevance between a comment and a preset tag, and the present disclosure is not intended to limit this.

Accordingly, the embodiments of the present disclosure may improve the efficiency of the user viewing comments in the historical live streaming event by providing the user with filtering based on the theme involved in the comments.

In some embodiments, the terminal device 110 may display a set of comments associated with a same user in a first mode, such that a portion of content in the set of comments is hidden. As shown in Fig. 2B, in the interface 200B, the terminal device 110 may display a plurality of comments 210 from a "user A" in a folded manner, for example. The terminal device 110 may, for example, further provide an entry 215 for expanding to display the plurality of comments.

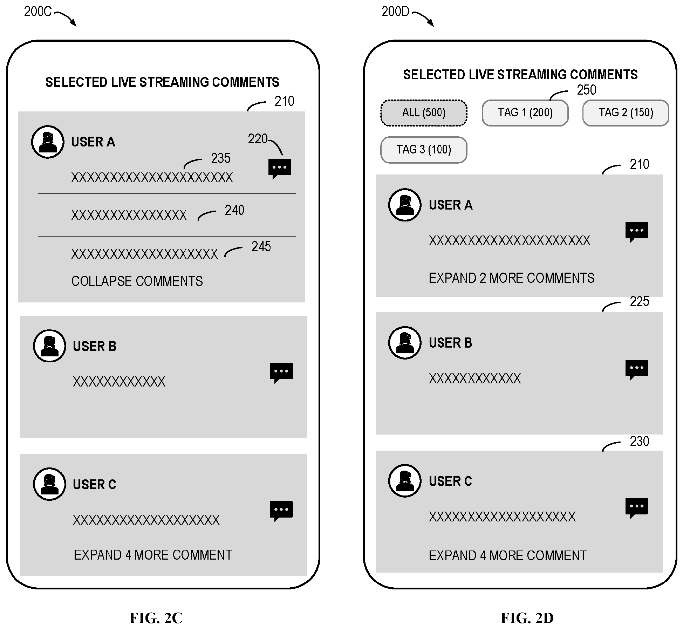

For example, after receiving a trigger operation (also referred to as a second operation) for the entry 215, the terminal device 110 may display the set of comments 210 in a second model. For example, as shown in Fig. 2C, the terminal device 110 may expand to display all the comments in the set of comments 210, for example, a comment 235, a comment 240, and a comment 245. Accordingly, the user may also click "collapse" the comments to continue to display the set of comments in the first mode, for example.

By aggregating a plurality of comments by the user, the embodiments of the present disclosure may further assist the user to perceive audience users who are active in interaction in the historical live streaming event, and may assist the user (for example, a live streamer) to obtain information such as interaction needs of such audience users more efficiently.

Fig. 2D illustrates an example target interface 200D according to some other embodiments of the present disclosure. For example, after receiving the selection for the entry 205, the terminal device 110 may display the interface 200D as shown in Fig. 2D.

As shown in Fig. 2D, the terminal device 110 may display, in the interface 200D, at least one tag (for example, a tag 250) associated with the plurality of comments or the at least one filtered comment in the historical live streaming event. Such tags may be associated with different themes, for example.

In some embodiments, such a tag 250 may be, for example, a preset tag associated with the live streaming room or the historical live streaming event. Such a preset tag may be, for example, a general tag, for example, "live streaming content". For example, if a comment involves a discussion on the live streaming content of the live streaming room, it may be determined to match the tag "live streaming content", for example.

As another example, such a preset tag may also be, for example, a preset tag corresponding to the live streaming room or the live streaming event. If the category of the live streaming room is product promotion, or the historical live streaming event is about the theme of product promotion, such preset tags may include, for example, one or more preset tags associated with product promotion, such as "product consultation", "after-sales service", and so on.

In some embodiments, such a tag may also be determined, for example, by processing the plurality of comments or the at least one filtered comment in the historical live streaming event. For example, the server 130 may determine one or more tags by clustering the plurality of comments or at least one comment that satisfies the preset condition in the plurality of comments.

In some embodiments, such a tag 250 may also be determined based on configuration information associated with the live streaming room, for example. The terminal device 110 may obtain configuration information for indicating a set of tags.

In some embodiments, the terminal device 110 may receive a first configuration operation from a target user associated with the live streaming room, and determine the configuration information accordingly. Such a target user may include, for example, a live streamer user or a manager of the live streaming room.

In some embodiments, the first configuration operation may indicate, for example, selecting a set of tags from a set of preset tags. For example, the terminal device 110 may receive the live streamer user's selection of one or more tags from a set of preset tags for filtering a plurality of comments received during the historical live streaming event.

In some embodiments, the terminal device 110 may receive a second configuration operation from a target user associated with the live streaming room, and determine the configuration information accordingly.

In some embodiments, the second configuration operation indicates modifying at least one preset tag and/or creating at least one new tag to determine the set of tags. For example, taking Fig. 2D as an example, the interface 200D may further provide an entry for modifying an existing tag or creating a new tag. Accordingly, after the target user completes such modification or creation operation, the tag information in the interface 200D may be updated accordingly, for example.

In some embodiments, the terminal device 110 may receive a third configuration operation from a target user associated with the live streaming room, and determine the configuration information accordingly.

In some embodiments, the third configuration operation may be used to indicate, for example, a scene associated with the live streaming room. Furthermore, the terminal device 110 may determine a corresponding set of tags based on the indicated scene. For example, the terminal device 110 may receive that the live streamer user's indication that the scene of the live streaming room is "e-commerce", and accordingly may determine a set of tags that match the scene of "e-commerce".

Based on this approach, the embodiments of the present disclosure may further support customizing corresponding tags for the live streaming room, which is used to filter comment content in the historical live streaming event, thereby improving the efficiency of obtaining the comment content.

Accordingly, after determining the set of tags, the electronic device 110 may present or update the interface 200D as shown in Fig. 2D to display, in the interface 200D, at least one comment that matches at least one tag in the set of tags in the historical live streaming event.

In some examples, the interface 200D may display, for example, comments (e.g., corresponding to an option "All") that match any tag in the set of tags by default. Alternatively, the interface 200D may also display comments that match one or more selected tags (e.g., the tag 250).

In some embodiments, as shown in Fig. 2D, the terminal device 110 may further display, in association with the at least one tag 250, the number of comments associated with the at least one tag 250. Therefore, the embodiments of the present disclosure may facilitate the user to perceive the main themes involved in the comments in the historical live streaming event.

In some embodiments, the terminal device 110 displays the at least one tag 250 in the interface 200D only when the number of comments associated with the at least one tag 250 in the plurality of comments or the at least one comment is greater than a threshold. For example, the server 130 may maintain multiple preset tags for the live streaming room or the historical live streaming event, for example. However, the number of comments matched by some preset tags may be relatively low. In this case, in order to further improve the user's information acquisition efficiency, the terminal device 110 may not display tags with the number of comments below a preset value.

In some embodiments, the display style of the at least one tag 250 in the interface 200D may also be changed based on the user's operation of viewing comments. For example, when the user swipes up the interface 200D to view more comments, the terminal device 110, for example, may only present a first row of tags. On the contrary, when the user swipes down the interface 200D, the terminal device 110 may resume presenting all tags 250.

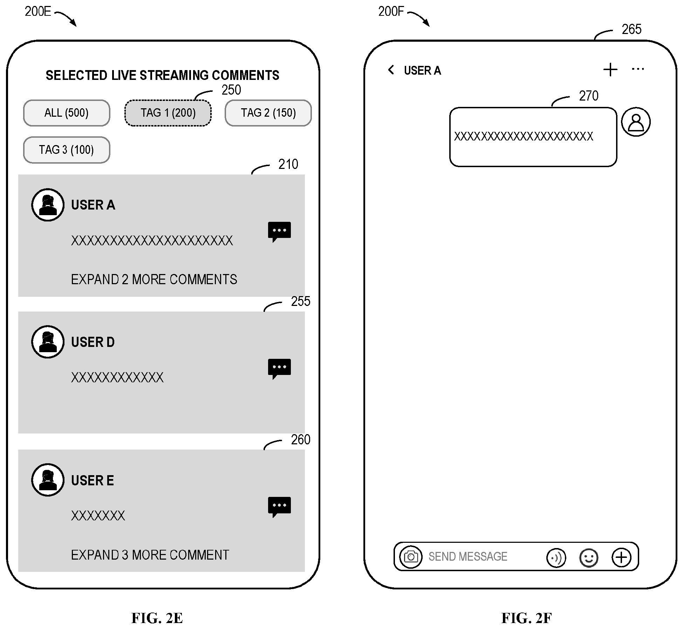

Continuing to refer to Fig. 2D, in the case of receiving the selection for a target tag (for example, tag 1) in the at least one tag 250, the terminal device 110 may present an interface 200E as shown in Fig. 2E.

In the interface 200E, the terminal device 110 may display a set of comments (for example, a comment 210, a comment 255, and a comment 260) associated with the target tag (for example, tag 1) in the plurality of comments or the at least one comment.

Therefore, the embodiments of the present disclosure can classify the themes involved in the comments in the historical live streaming event, and thereby can help the user locate comments related to a specific content theme more efficiently.

In some embodiments, a display order of the comment 210, the comment 255, and the comment 260 in the interface 200E may be determined based on the relevance between the set of comments and the target tag (for example, tag 1). For example, the comment 210 with a higher relevance may have a higher display priority.

In some embodiments, the terminal device 110 may further support the user to provide feedback on the comments, for example. For example, the terminal device 110 may receive the selection for a target comment in the set of comments, and generate feedback information for the target comment accordingly, where the feedback information relates to the relevance between the target comment and the target tag.

Taking Fig. 2E as an example, the terminal device 110 may select the comment 255 and the comment 260, for example, and may trigger a feedback control to instruct the terminal device 110 to generate feedback information indicating that the relevance between the comment 255 and the tag "tag 1" and the relevance between the comment 260 and the tag "tag 1" are not high. Such feedback information may be provided to the server 130, for example, for further optimizing the second model as introduced above.

Furthermore, as shown in Fig. 2B to Fig. 2E, the terminal device 110 may further display an entry for initiating a chat in association with the at least one comment. Taking Fig. 2B as an example, the terminal device 110 may provide an entry 220 in association with the comment 210.

After receiving the selection for the entry 220, the terminal device 110 may display an interface 200F as shown in Fig. 2F, for example. In the interface 200F, the terminal device 110 may display a chat interface 265 of a chat with the "user A" who posted the comment 210.

Furthermore, as shown in Fig. 2F, the terminal device 110 may further display a message 270 sent to the "user A" in the chat interface 265. For example, when the current user (for example, a live streamer) perceives a specific interaction need of the "user A" through comment review, the terminal device 110 may support the current user to quickly initiate a chat with the "user A", so as to respond to such an interaction need in time.

In some embodiments, in order to facilitate the user to perceive the theme involved in the current chat, such a message 270 may further indicate a reference to at least one comment from the "user A", for example, so that the efficiency of information interaction in the chat may be improved.

The display logic of the target interface 200B or the target interface 200D is described above in combination with the entry 205 as shown in Fig. 2A. In some embodiments, the terminal device 110, for example, may further display the target interface 200B or 200D associated with the historical live streaming event of the live streaming room based on an appropriate type of viewing request from a specific user (for example, a live streamer user or a management user) associated with the live streaming room.

As an example, the terminal device 110 may further provide an entry for accessing the target interface in other appropriate interfaces. For example, the live streamer user may trigger the display of the target interface by selecting this entry.

Based on the interaction process described above, the embodiments of the present disclosure can provide comment review about the historical live streaming event, and may present filtered comments to improve the efficiency of obtaining comments.

### EXAMPLE PROCESS

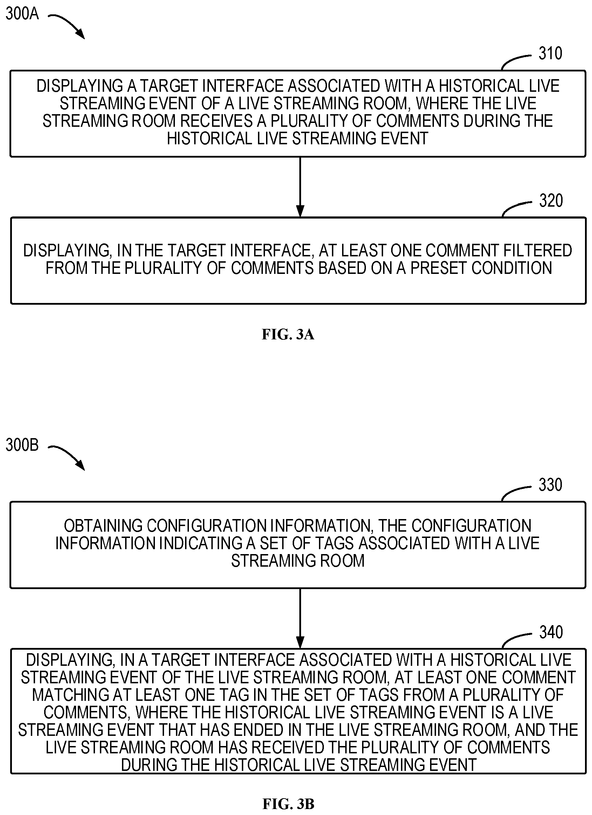

Fig. 3A illustrates a flowchart of an example information display process 300A according to some embodiments of the present disclosure. The process 300A may be implemented at the terminal device 110 associated with a user (for example, a live streamer, a user participating in a live streaming event, or an audience) in a live streaming room. The process 300A will be described below with reference to Fig. 1.

As shown in Fig. 3A, at block 310, the terminal device 110 displays a target interface associated with a historical live streaming event of a live streaming room, where the live streaming room receives a plurality of comments during the historical live streaming event.

At block 320, the terminal device 110 displays, in the target interface, at least one comment filtered from the plurality of comments based on a preset condition.

In some embodiments, the process 300A further includes: displaying, in the target interface, at least one tag associated with the plurality of comments or the at least one comment; and displaying, based on a selection for a target tag in the at least one tag, a first set of comments associated with the target tag in the plurality of comments or the at least one comment.

In some embodiments, a display order of the first set of comments is determined based on relevance between the first set of comments and the target tag.

In some embodiments, displaying, in the target interface, at least one tag associated with the plurality of comments includes: in response to the number of comments associated with the at least one tag in the plurality of comments or the at least one comment being greater than a first threshold, displaying the at least one tag in the target interface.

In some embodiments, the process 300A further includes: displaying, in association with the at least one tag, the number of comments associated with the at least one tag.

In some embodiments, the at least one tag includes: a preset tag associated with the live streaming room or the historical live streaming event; or a tag generated by processing the plurality of comments or the at least one comment.

In some embodiments, the process 300A further includes: generating, based on a selection for a target comment in the first set of comments, feedback information for the target comment, the feedback information relating to a relevance between the target comment and the target tag.

In some embodiments, the preset condition includes that a content evaluation of the comment is above a second threshold, and the content evaluation is determined by processing the comment using a first model.

In some embodiments, the preset condition includes that a relevance of the comment to a preset tag is above a third threshold, and the relevance is determined by processing the comment using a second model.

In some embodiments, displaying the target interface associated with the historical live streaming event of the live streaming room includes: displaying the target interface associated with the historical live streaming event of the live streaming room based on a viewing request from a first user associated with the live streaming room.

In some embodiments, the process 300A further includes: displaying a first entry in a review interface of the historical live streaming event; and receiving the viewing request from the first user based on a first operation of the first user on the first entry.

In some embodiments, the first entry indicates: a first number of comments associated with a preset theme in the plurality of comments or the at least one comment, and/or a second number of users who send comments associated with the preset theme during the historical live streaming event.

In some embodiments, displaying, in the target interface, the at least one comment filtered from the plurality of comments based on the preset condition includes: displaying, in the target interface, a second set of comments associated with a same user in a first mode, such that a portion of content in the second set of comments is hidden; and displaying the second set of comments in a second mode based on a received second operation.

In some embodiments, the process 300A further includes: displaying a second entry in association with the at least one comment; and displaying a chat interface of a chat with a second user based on a selection for the second entry, the second user corresponding to the at least one comment.

In some embodiments, the process 300A further includes: displaying, in the chat interface, a message sent to the second user, where the message indicates a reference to the at least one comment.

Fig. 3B illustrates a flowchart of an example information display process 300B according to some embodiments of the present disclosure. The process 300B may be implemented at the terminal device 110 associated with a user (for example, a live streamer, a user participating in a live streaming event, or an audience) in a live streaming room. The process 300B will be described below with reference to Fig. 1.

As shown inFig. 3B, at block 330, the terminal device 110 obtains configuration information, the configuration information indicating a set of tags associated with a live streaming room.

At block 340, the terminal device 110 displays, in a target interface associated with a historical live streaming event of the live streaming room, at least one comment matching at least one tag in the set of tags from a plurality of comments, where the historical live streaming event is a live streaming event that has ended in the live streaming room, and the live streaming room has received the plurality of comments during the historical live streaming event.

In some embodiments, obtaining the configuration information includes: receiving a first configuration operation from a target user associated with the live streaming room, the first configuration operation indicating selecting the set of tags from a set of preset tags; receiving a second configuration operation from the target user, the second configuration operation indicating modifying at least one preset tag and/or creating at least one new tag to determine the set of tags; or receiving a third configuration operation from the target user, the third configuration operation indicating a scene associated with the live streaming room, to determine the corresponding set of tags based on the scene.

In some embodiments, the process 300B further includes: presenting the set of tags in the target interface.

### EXAMPLE APPARATUS AND DEVICE

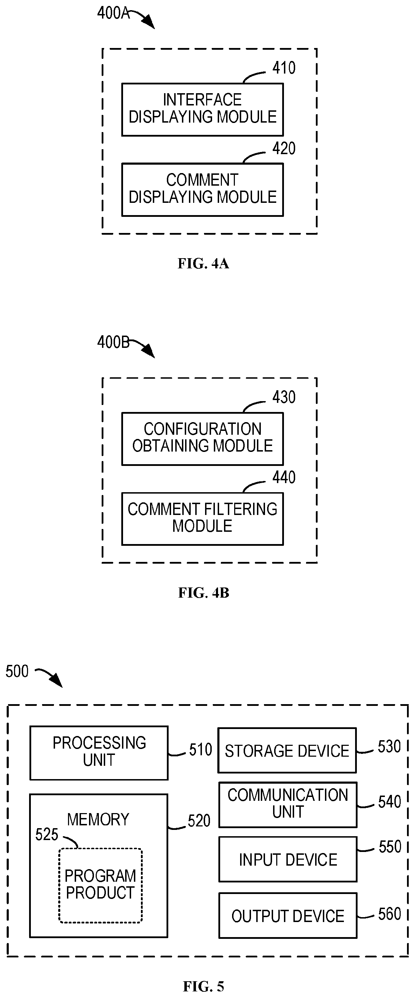

The embodiments of the present disclosure further provide corresponding apparatuses for implementing the above methods or processes. Fig. 4A illustrates a schematic structural block diagram of an information display apparatus 400A according to some embodiments of the present disclosure. The apparatus 400A may be implemented as or included in the terminal device 110. Each module/component in the apparatus 400A may be implemented by hardware, software, firmware, or any combination thereof.

As shown in Fig. 4, the apparatus 400A includes an interface displaying module 410 configured to display a target interface associated with a historical live streaming event of a live streaming room, where the live streaming room receives a plurality of comments during the historical live streaming event; and a comment displaying module 420 configured to display, in the target interface, at least one comment filtered from the plurality of comments based on a preset condition.

In some embodiments, the apparatus 400A further includes a tag module configured to: display, in the target interface, at least one tag associated with the plurality of comments or the at least one comment; and display, based on a selection for a target tag in the at least one tag, a first set of comments associated with the target tag in the plurality of comments or the at least one comment.

In some embodiments, a display order of the first set of comments is determined based on relevance between the first set of comments and the target tag.

In some embodiments, the tag module is further configured to: in response to the number of comments associated with the at least one tag in the plurality of comments or the at least one comment being greater than a first threshold, display the at least one tag in the target interface.

In some embodiments, the tag module is further configured to: display, in association with the at least one tag, the number of comments associated with the at least one tag.

In some embodiments, the at least one tag includes: a preset tag associated with the live streaming room or the historical live streaming event; or a tag generated by analyzing the plurality of comments or the at least one comment.

In some embodiments, the apparatus 400A further includes a feedback module configured to: generate, based on a selection for a target comment in the first set of comments, feedback information for the target comment, the feedback information relating to a relevance between the target comment and the target tag.

In some embodiments, the preset condition includes that a content evaluation of the comment is above a second threshold, the content evaluation is determined by processing the comment using a first model.

In some embodiments, the preset condition includes that a relevance of the comment to a preset tag is above a third threshold, the relevance is determined by processing the comment using a second model.

In some embodiments, the interface displaying module 410 is further configured to: display the target interface associated with the historical live streaming event of the live streaming room based on a viewing request from a first user associated with the live streaming room.

In some embodiments, the apparatus 400A further includes a request module configured to: display a first entry in a review interface of the historical live streaming event; and receive the viewing request from the first user based on a first operation of the first user on the first entry.

In some embodiments, the first entry indicates: a first number of comments associated with a preset theme in the plurality of comments or the at least one comment, and/or a second number of users who send comments associated with the preset theme during the historical live streaming event.

In some embodiments, the comment displaying module 420 is further configured to: display, in the target interface, a second set of comments associated with a same user in a first mode, such that a portion of content in the second set of comments is hidden; and display the second set of comments in a second mode based on a received second operation.

In some embodiments, the apparatus 400A further includes a chat module configured to: display a second entry in association with the at least one comment; and display a chat interface of a chat with a second user based on a selection for the second entry, the second user corresponding to the at least one comment.

The embodiments of the present disclosure further provide corresponding apparatuses for implementing the above methods or processes. Fig. 4B illustrates a schematic structural block diagram of an information display apparatus 400B according to some embodiments of the present disclosure. The apparatus 400B may be implemented as or included in the terminal device 110. Each module/component in the apparatus 400B may be implemented by hardware, software, firmware, or any combination thereof.

As shown in Fig. 4, the apparatus 400B includes a configuration obtaining module 430 configured to obtain configuration information, the configuration information indicating a set of tags associated with a live streaming room; and a comment filtering module 440 configured to display, in a target interface associated with a historical live streaming event of the live streaming room, at least one comment matching at least one tag in the set of tags from a plurality of comments, where the historical live streaming event is a live streaming event that has ended in the live streaming room, and the live streaming room has received the plurality of comments during the historical live streaming event.

In some embodiments, the configuration obtaining module 430 is further configured to: receive a first configuration operation from a target user associated with the live streaming room, the first configuration operation indicating selecting the set of tags from a set of preset tags; receive a second configuration operation from the target user, the second configuration operation indicating modifying at least one preset tag and/or creating at least one new tag to determine the set of tags; or receive a third configuration operation from the target user, the third configuration operation indicating a scene associated with the live streaming room, to determine the corresponding set of tags based on the scene. In some embodiments, the apparatus 400 further includes a tag displaying module configured to: present the set of tags in the target interface.

In some embodiments, the chat module is further configured to: display, in the chat interface, a message sent to the second user, where the message indicates a reference to the at least one comment.

Fig. 5 illustrates a block diagram of an electronic device 500 in which one or more embodiments of the present disclosure may be implemented. It should be understood that the electronic device 500 shown in Fig. 5 is only illustrative and should not constitute any limitation on the functionality and scope of the embodiments described herein. The electronic device 500 shown in Fig. 5 may be used to implement the terminal device 110 in Fig. 1.

As shown in Fig. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and may execute various processes based on the programs stored in the memory 520. In a multi-processor system, multiple processing units execute computer executable instructions in parallel to improve the parallel processing capability of the electronic device 500.

The electronic device 500 typically includes multiple computer storage medium. Such medium may be any available medium that is accessible to the electronic device 500, including, but not limited to, volatile and non-volatile medium, removable and non-removable medium. The memory 520 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in Fig. 5, a disk drive for reading from or writing to a removable, non-volatile disk (for example, a "floppy disk"), and an optical disk drive for reading from or writing to a removable, non-volatile optical disk may be provided. In these cases, each drive may be connected to the bus (not shown) by one or more data medium interfaces. The memory 520 may include a computer program product 525, which has one or more program modules configured to perform various methods or acts of various embodiments of the present disclosure.

The communication unit 540 enables communication with other electronic devices via the communication medium. Additionally, the functions of the components of the electronic device 500 may be implemented by a single computing cluster or multiple computing machines, which may communicate through a communication connection. Therefore, the electronic device 500 may use a logical connection with one or more other servers, a network personal computer (PC), or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) via the communication unit 540 as needed, the external devices such as a storage device, a display device, etc., communicate with one or more devices that enable the user to interact with the electronic device 500, or communicate with any devices (for example, a network card, a modem, etc.) that enable the electronic device 500 to communicate with one or more other electronic devices. Such communication may be performed via input/output (I/O) interfaces (not shown).

According to an example implementation of the present disclosure, there is provided a computer-readable storage medium having computer executable instructions stored thereon, where the computer executable instructions are executed by a processor to implement the method described above. According to an example implementation of the present disclosure, there is further provided a computer program product tangibly stored on a non-transitory computer-readable medium and including computer executable instructions, where the computer executable instructions are executed by a processor to implement the method described above.

Various aspects of the present disclosure are described herein with reference to the flowcharts and/or block diagrams of the method, the apparatus, the device, and the computer program product implemented according to the present disclosure. It should be understood that each block of the flowchart and/or block diagram, and combinations of the blocks in the flowchart and/or block diagram may be implemented by computer-readable program instructions.

These computer-readable program instructions may be provided to the processing unit of a general-purpose computer, a special-purpose computer, or other programmable data processing apparatus to produce a machine, such that when these instructions are executed by the processing unit of the computer or other programmable data processing apparatus, an apparatus for implementing the functions/actions specified in one or more blocks of the flowchart and/or block diagram is produced. These computer-readable program instructions may also be stored in a computer-readable storage medium, these instructions make the computer, the programmable data processing apparatus, and/or other devices work in a specific way, so that the computer-readable medium storing the instructions includes a manufactured product, which includes instructions for implementing various aspects of the functions/actions specified in one or more blocks of the flowchart and/or block diagram.

The computer-readable program instructions may be loaded onto a computer, another programmable data processing apparatus, or other devices, so that a series of operation steps are performed on the computer, the other programmable data processing apparatus, or the other devices to produce a computer-implemented process, so that the instructions executed on the computer, the other programmable data processing apparatus, or the other devices implement the functions/actions specified in one or more blocks of the flowchart and/or block diagram.

The flowcharts and block diagrams in the drawings show the possibly implemented architectures, functions, and operations of the system, the method, and the computer program product according to multiple implementations of the present disclosure. In this regard, each block in the flowchart or block diagram may represent a module, program segment, or part of an instruction, and the module, program segment, or part of an instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a special-purpose hardware-based system that executes specified functions or actions, or may be implemented by a combination of special-purpose hardware and computer instructions.

Various implementations of the present disclosure have been described above, and the above description is illustrative, non-exhaustive, and not limited to the disclosed implementations. Without departing from the scope and spirit of the illustrated implementations, many modifications and changes will be apparent to those of ordinary skill in the art. The terms used herein are chosen to best explain the principles of the implementations, the practical applications, or improvements to the technologies in the market, or to enable other those of ordinary skill in the art to understand the implementations disclosed herein.

## Claims

1. An information display method, comprising:
displaying a target interface associated with a historical live streaming event of a live streaming room, wherein the historical live streaming event is a live streaming event that has ended in the live streaming room, and the live streaming room has received a plurality of comments during the historical live streaming event; and
displaying, in the target interface, at least one comment filtered from the plurality of comments based on a preset condition.

2. The method of claim 1, further comprising:
displaying, in the target interface, at least one tag associated with the plurality of comments or the at least one comment; and
displaying, based on a selection for a target tag in the at least one tag, a first set of comments associated with the target tag in the plurality of comments or the at least one comment.

3. The method of claim 2, wherein an arrangement order of the first set of comments is determined based on relevance between the first set of comments and the target tag.

4. The method of claim 2, wherein displaying, in the target interface, the at least one tag associated with the plurality of comments or the at least one comment comprises:
displaying the at least one tag in the target interface, in response to the number of comments associated with the at least one tag in the plurality of comments or the at least one comment being greater than a first threshold,.

5. The method of claim 2, further comprising:
displaying, in association with the at least one tag, the number of comments associated with the at least one tag.

6. The method of claim 2, wherein the at least one tag comprises:
a preset tag associated with the live streaming room or the historical live streaming event; or
a tag generated by processing the plurality of comments or the at least one comment.

7. The method of claim 2, further comprising:
generating, based on a selection for a target comment in the first set of comments, feedback information for the target comment, the feedback information relating to a relevance between the target comment and the target tag.

8. The method of claim 1, wherein the preset condition comprises that a content evaluation of the comment is above a second threshold, and the content evaluation is determined by processing the comment using a first model.

9. The method of claim 1, wherein the preset condition comprises that a relevance of the comment to a preset tag is above a third threshold, and the relevance is determined by processing the comment using a second model.

10. The method of claim 1, wherein displaying the target interface associated with the historical live streaming event of the live streaming room comprises:
displaying the target interface associated with the historical live streaming event of the live streaming room based on a viewing request from a first user associated with the live streaming room.

11. The method of claim 10, further comprising:
displaying a first entry in a review interface of the historical live streaming event; and
receiving the viewing request from the first user based on a first operation of the first user on the first entry.

12. The method of claim 11, wherein the first entry indicates:
a first number of comments associated with a preset theme in the plurality of comments or the at least one comment, and/or
a second number of users who send comments associated with the preset theme during the historical live streaming event.

13. The method of claim 1, wherein displaying, in the target interface, the at least one comment filtered from the plurality of comments based on the preset condition comprises:
displaying, in the target interface, a second set of comments associated with a same user in a first mode, such that a portion of the second set of comments is hidden; and
displaying the second set of comments in a second mode based on a received second operation.

14. The method of claim 1, further comprising:
displaying a second entry in association with the at least one comment; and
displaying a chat interface of a chat with a second user based on a selection for the second entry, the second user corresponding to the at least one comment.

15. The method of claim 14, further comprising:
displaying, in the chat interface, a message sent to the second user, wherein the message indicates a reference to the at least one comment.

16. An information display method, comprising:
obtaining configuration information, the configuration information indicating a set of tags associated with a live streaming room; and
displaying, in a target interface associated with a historical live streaming event of the live streaming room, at least one comment matching at least one tag in the set of tags from a plurality of comments, wherein the historical live streaming event is a live streaming event that has ended in the live streaming room, and the live streaming room has received the plurality of comments during the historical live streaming event.

17. The method of claim 16, wherein obtaining the configuration information comprises:
receiving a first configuration operation from a target user associated with the live streaming room, the first configuration operation indicating selecting the set of tags from a set of preset tags;
receiving a second configuration operation from the target user, the second configuration operation indicating modifying at least one preset tag and/or creating at least one new tag to determine the set of tags; or
receiving a third configuration operation from the target user, the third configuration operation indicating a scene associated with the live streaming room, to determine the corresponding set of tags based on the scene.

18. The method of claim 16, further comprising:
presenting the set of tags in the target interface.

19. An apparatus for information display, comprising:
an interface displaying module configured to display a target interface associated with a historical live streaming event of a live streaming room, wherein the historical live streaming event is a live streaming event that has ended in the live streaming room, and the live streaming room has received a plurality of comments during the historical live streaming event; and
a comment displaying module configured to display, in the target interface, at least one comment filtered from the plurality of comments based on a preset condition.

20. An apparatus for information display, comprising:
a configuration obtaining module configured to obtain configuration information, the configuration information indicating a set of tags associated with a live streaming room; and
a comment filtering module configured to display, in a target interface associated with a historical live streaming event of the live streaming room, at least one comment matching at least one tag in the set of tags from a plurality of comments, wherein the historical live streaming event is a live streaming event that has ended in the live streaming room, and the live streaming room has received the plurality of comments during the historical live streaming event.

21. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 15 or claims 16 to 18.

22. A computer-readable storage medium having a computer program stored thereon, the computer program being executable by a processor to implement the method of any of claims 1 to 15 or claims 16 to 18.
